# EUROPEAN PATENT APPLICATION

(11) **EP 4 804 473 A1**
(43) Date of publication of application: **09.09.2026**
(21) Application number: 26162043.9
(22) Date of filing: 03.03.2026
(51) Int. Cl.: H04L 41/0806, H04L 41/14, H04L 41/147, H04L 41/16, H04L 41/0631, H04L 41/08, H04L 41/0816, H04L 41/142

(54) **ARTIFICIAL INTELLIGENCE PROCESSING AT NETWORK EDGE**

(30) Priority: 03.03.2025 US 202563766179 P; 11.02.2026 US 202619537180
(71) Applicant: Juniper Networks, Inc., Sunnyvale, CA 94089-1206 (US)
(72) Inventor: FREI, Randall W., Sunnyvale, 94089 (US); FRIDAY, Robert J., Sunnyvale, 94089 (US)
(74) Representative: Marks & Clerk LLP

(57) **Abstract**

Techniques are described for performing artificial intelligence (AI) processing of locally accessible data at a network access device at a network edge in coordination with a network management system (NMS) configured to manage a plurality of network access devices over the network. The NMS assigns one or more AI models to one or more network access devices. The NMS may synchronously or asynchronously initiate distribution of model parameters of the AI models to the assigned network access devices. A network access device accesses, from the NMS over the network, model parameters of an AI model assigned to the network access device. The network access device determines, using the AI model running on processing circuitry of the network access device, one or more inferences based on data locally accessible at the network access device, and sends an indication of the one or more inferences to the NMS over the network.

## Description

This application claims the benefit of US Patent Application No. 19/537,180, filed 11 February 2026, which claims the benefit of US Provisional Patent Application No. 63/766,179, filed 3 March 2025, the entire content of each application is incorporated herein by reference.

### TECHNICAL FIELD

The disclosure relates generally to computer networks and, more specifically, to monitoring and troubleshooting computer networks.

### BACKGROUND

Commercial premises or sites, such as offices, hospitals, airports, stadiums, or retail outlets, often install complex wireless network systems, including a network of wireless access points (APs), throughout the premises to provide wireless network services to one or more wireless client devices (or simply, "clients"). APs are physical, electronic devices that enable other devices to wirelessly connect to a wired network using various wireless networking protocols and technologies, such as wireless local area networking protocols conforming to one or more of the IEEE 802.11 standards (i.e., "WiFi"), Bluetooth / Bluetooth Low Energy (BLE), mesh networking protocols such as ZigBee, or other wireless networking technologies.

Many different types of wireless client devices, such as laptop computers, smartphones, tablets, wearable devices, appliances, and Internet of Things (IoT) devices, incorporate wireless communication technology and can be configured to connect to wireless APs when the device is in range of a compatible wireless AP in order to access a wired network. In the case of a client device running a cloud-based application, such as voice over Internet Protocol (VOIP) applications, streaming video applications, gaming applications, or video conference applications, data is exchanged during an application session from the client device through one or more APs and one or more wired network devices, e.g., switches, routers, and/or gateway devices, to reach the cloud-based application server.

### SUMMARY

Particular aspects are set out in the appended independent claims. Various optional embodiments are set out in the dependent claims.

In general, this disclosure describes one or more techniques for performing artificial intelligence (AI) processing of locally accessible data at a network access device at a network edge in coordination with a network management system (NMS) configured to manage a plurality of network access devices over the network. The network access device may access, from the NMS, one or more model parameters (e.g., weights and/or biases) of an AI model trained on data for the plurality of network access devices. In some examples, the NMS may instruct the network access device to generate or load the AI model by pushing the one or more model parameters of the AI model to the network access device via a secure connection.

The network access device may then determine, using the AI model running on processing circuitry of the network access device, one or more inferences based on data locally accessible at the network access device. The inferences may be inferences of future performance in terms of throughput, latency, and/or end user experience based on a full set of real time data or near-real time data locally accessible at the network access device. The data locally accessible at the network access device may include real time or near-real time client level statistics (e.g., RSSI), radio statistics (e.g., channel capacity), transmission statistics, and/or event data. In some examples, the network access device may also obtain one or more network parameters indicative of performance of the network from the NMS or another network device over the network. The network parameters may comprise non-real time site-level parameters, such as WAN bandwidth, to which the network access device does not have local access but that generally have a low frequency of change, e.g., daily, weekly, or monthly, compared to the near-constantly changing data monitored at the network access device. The network access device may then use both the locally accessible data and the obtained network parameters as input to the AI model. The network access device may send an indication of the determined inferences output from the AI model to the NMS over the network.

A cloud-based NMS may provide powerful processing to perform AI-based inferences and root cause analyses based on data obtained for a plurality of network access devices, such as APs or switches, routers, and/or gateways. Sending large amounts of data to the cloud, however, comes at a high cost in terms of latency and loss of granularity. For example, to enable relatively timely upload of data monitored at each network access device to the NMS, a data package cannot include all of the data at the network access device. In addition, the uploaded data cannot be obtained by the NMS in real time. As such, AI processing of network access device data at the NMS may suffer from more than an hour of latency that cannot be reduced down to the frequency or granularity of the data locally accessible at the network access device itself.

The techniques of this disclosure provide one or more technical advantages and practical applications. As one example, because the AI processing is co-located with the data locally accessible at the network access device, the AI model running on the network access device is able to determine inferences with a high rate of frequency or granularity. In some scenarios, if an issue is inferred by the AI processing at the network access device, the network access device itself may use the AI model to perform root cause analysis of the issue and/or perform an action to remediate the issue. It may be beneficial to perform the root cause analysis at the network access device itself such that the analysis can be run with the full set of data from which the issue was inferred. As such, the disclosed techniques significantly reduce latency and improve granularity associated with inferring future performance issues at network access devices by pushing the AI processing to the network access devices at the network edge while maintaining the AI models used for the AI processing at the NMS.

As another example, the disclosed techniques may push some AI processing to the network edge to be co-located with the data being processed while still performing more resource-intensive AI processing, e.g., root cause analyses, or higher level AI processing, e.g., scope analyses, at the NMS. In some scenarios, if an issue is inferred by the AI processing at the network access device, the network access device may send an indication of the inferred issue and a package of the data from which the issue was inferred to the NMS. The NMS may then use a version of the AI model at the NMS to perform root cause analysis of the issue based on the obtained data and/or generate instructions to cause the network access device or another network device to perform an action to remediate the issue. It may be beneficial to perform the root cause analysis at the NMS to offload larger processing jobs from the network access device itself and, potentially, to aggregate the data obtained from the network access device with data from other network access devices within a group, site, region, or organization for root cause analysis and/or scope analysis. In these examples, the inferred issue at the network access device may act as a trigger such that a large amount of data is only transmitted over the network to the NMS for more advanced processing if an issue is first inferred at the network access device. As such, the disclosed techniques provide an intelligent solution for cloud-based network management that balances the competing concerns of data transmission costs (e.g., in terms of latency and granularity) and processing costs (e.g., in terms of resources and device costs).

In one example, this disclosure is directed to a system comprising a network management system configured to assign one or more AI models to one or more network access devices, and a network access device of the one or more network access devices, the network access device comprising processing circuitry configured to access, from the network management system over a network, model parameters of an AI model assigned to the network access device; determine, using the AI model running on the processing circuitry, one or more inferences based on data locally accessible at the network access device; and send an indication of the one or more inferences to the network management system over the network.

In another example, this disclosure is directed to a method comprising assigning, by a network management system, one or more AI models to one or more network access devices; accessing, by a network access device of the one or more network access devices and from the network management system over a network, model parameters of an AI model assigned to the network access device; determining, by the network access device using the AI model running on processing circuitry of the network access device, one or more inferences based on data locally accessible at the network access device; and sending, by the network access device, an indication of the one or more inferences to the network management system over the network.

In a further example, this disclosure is directed to computer-readable media comprising instructions that when executed cause processing circuitry to assign, by a network management system, one or more AI models to one or more network access devices; access, by a network access device of the one or more network access devices and from the network management system over a network, model parameters of an AI model assigned to the network access device; determine, using the AI model running on processing circuitry of the network access device, one or more inferences based on data locally accessible at the network access device; and send, by the network access device, an indication of the one or more inferences to the network management system over the network.

The details of one or more examples of the techniques of this disclosure are set forth in the accompanying drawings and the description below. Other features, objects, and advantages of the techniques will be apparent from the description and drawings, and from the claims.

### BRIEF DESCRIPTION OF DRAWINGS

FIG. 1A is a block diagram of an example network system including a network management system and a plurality of network access devices, in accordance with one or more techniques of the disclosure.
FIG. 1B is a block diagram illustrating further example details of the network system of FIG. 1A.
FIG. 2 is a block diagram of an example access point device, in accordance with one or more techniques of this disclosure.
FIG. 3 is a block diagram of an example network management system, in accordance with one or more techniques of the disclosure.
FIG. 4 is a block diagram of an example user equipment device, in accordance with one or more techniques of this disclosure.
FIG. 5 is a block diagram of an example network node, such as a router or switch, in accordance with one or more techniques of this disclosure.
FIG. 6 is a flowchart of an example operation of performing AI processing at a network access device at a network edge in coordination with a network management system, in accordance with one or more techniques of this disclosure.

### DETAILED DESCRIPTION

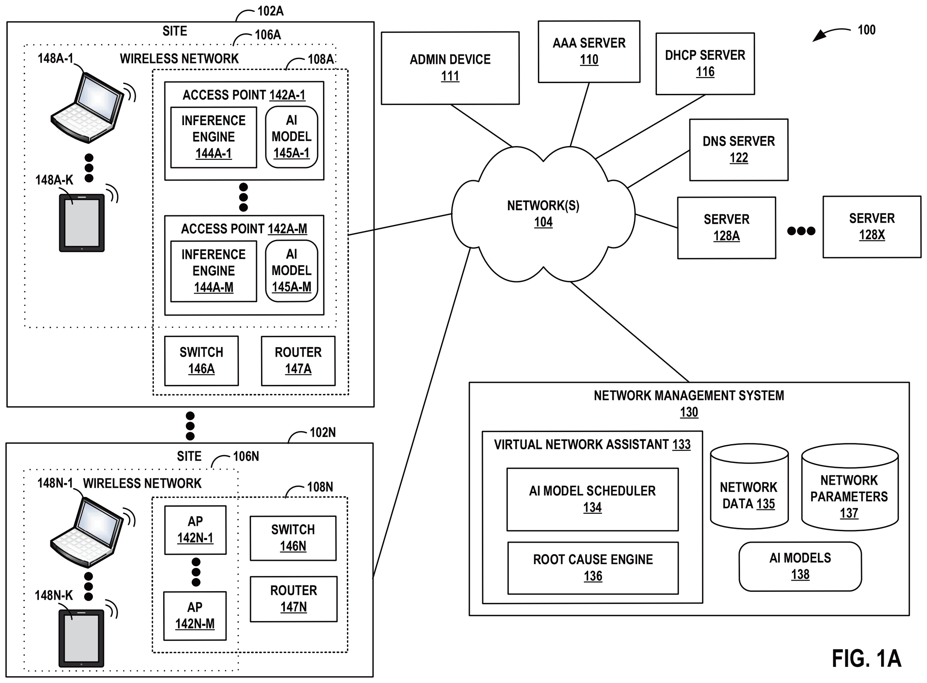

FIG. 1A is a block diagram of an example network system 100 including a network management system (NMS) 130 and a plurality of network access devices 108, in accordance with one or more techniques of this disclosure. Example network system 100 includes a plurality sites 102A-102N at which a network service provider manages one or more wireless networks 106A-106N, respectively. Although in FIG. 1A each site 102A-102N is shown as including a single wireless network 106A-106N, respectively, in some examples, each site 102A-102N may include multiple wireless networks, and the disclosure is not limited in this respect.

Each site 102A-102N includes a plurality of network access devices 108A-108N, such as access points (APs) 142, switches 146, and/or routers 147. For example, site 102A includes a plurality of APs 142A-1 through 142A-M. Similarly, site 102N includes a plurality of APs 142N-1 through 142N-M. Each AP 142 may be any type of wireless access point, including, but not limited to, a commercial or enterprise AP, a router, or any other device that is connected to a wired network and is capable of providing wireless network access to client devices within the site. In accordance with the disclosed techniques, one or more of APs 142 may include an inference engine 144 and at least one AI model 145. For example, at site 102A, APs 142A-1 through 142A-M include inference engines 144A-1 through 144A-M and AI models 145A-1 through 145A-M. Although not illustrated in FIG. 1A, APs 142N-1 through 142N-M at site 102N may similarly include inference engines and AI models. In this example, at least each of APs 142A at site 102A comprise processing circuitry capable of running AI models 145. As described in more detail below, NMS 130 may train, update, or otherwise maintain AI models 138 on behalf of APs 142A and manage distribution of model parameters (e.g., weights and/or biases) of AI models 138 to one or more of APs 142A. APs 142A may then generate or load local versions of the AI models corresponding to the model parameters, e.g., AI models 145.

Each site 102A-102N also includes a plurality of client devices, otherwise known as user equipment devices (UEs), referred to generally as UEs or client devices 148, representing various wireless-enabled devices within each site. For example, a plurality of UEs 148A-1 through 148A-K are currently located at site 102A. Similarly, a plurality of UEs 148N-1 through 148N-K are currently located at site 102N. Each UE 148 may be any type of wireless client device, including, but not limited to, a mobile device such as a smart phone, tablet or laptop computer, a personal digital assistant (PDA), a wireless terminal, a smart watch, smart ring, or other wearable device. UEs 148 may also include wired client-side devices, e.g., IoT devices such as printers, security devices, environmental sensors, or any other device connected to the wired network and configured to communicate over one or more wireless networks 106.

In order to provide wireless network services to UEs 148 and/or communicate over the wireless networks 106, APs 142 and the other wired client-side devices at sites 102 are connected, either directly or indirectly, to one or more network devices (e.g., switches, routers, or the like) via physical cables, e.g., Ethernet cables. In the example of FIG. 1A, site 102A includes a switch 146A to which each of APs 142A-1 through 142A-M at site 102A are connected, and switch 146A may, in turn, be connected to a router 147A. Similarly, site 102N includes a switch 146N to which each of APs 142N-1 through 142N-M at site 102N are connected, and switch 146N may, in turn, be connected to a router 147N. Although illustrated in FIG. 1A as if each site 102 includes a single switch 146 and a single router 147, in other examples, each site 102 may include more or fewer switches and/or routers. In addition, the APs and the other wired client-side devices of the given site may be connected to two or more switches and/or routers. Furthermore, two or more switches at a site may be connected to each other and/or connected to two or more routers, e.g., via a mesh or partial mesh topology in a hub- and-spoke architecture. In some examples, interconnected switches and routers comprise wired local area networks (LANs) at sites 102 hosting wireless networks 106.

Example network system 100 also includes various networking components for providing networking services within the wired network including, as examples, an Authentication, Authorization and Accounting (AAA) server 110 for authenticating users and/or UEs 148, a Dynamic Host Configuration Protocol (DHCP) server 116 for dynamically assigning network addresses (e.g., IP addresses) to UEs 148 upon authentication, a Domain Name System (DNS) server 122 for resolving domain names into network addresses, a plurality of servers 128A-128X (collectively "servers 128") (e.g., web servers, databases servers, file servers and the like), and NMS 130. As shown in FIG. 1A, the various devices and systems of network system 100 are coupled together via one or more network(s) 104, e.g., the Internet and/or an enterprise intranet.

In the example of FIG. 1A, NMS 130 is a cloud-based computing platform that manages wireless networks 106A-106N at one or more of sites 102A-102N. As further described herein, NMS 130 provides an integrated suite of management tools and implements various techniques of this disclosure. In general, NMS 130 may provide a cloud-based platform for wireless network data acquisition, monitoring, activity logging, reporting, predictive analytics, network anomaly identification, and alert generation. In some examples, NMS 130 outputs notifications, such as alerts, alarms, graphical indicators on dashboards, log messages, text / SMS messages, email messages, and the like, and/or recommendations regarding wireless network issues to a site or network administrator ("admin") interacting with and/or operating admin device 111. Additionally, in some examples, NMS 130 operates in response to configuration input received from the administrator interacting with and/or operating admin device 111.

The administrator and admin device 111 may comprise IT personnel and an administrator computing device associated with one or more of sites 102. Admin device 111 may be implemented as any suitable device for presenting output and/or accepting user input. For instance, admin device 111 may include a display. Admin device 111 may be a computing system, such as a mobile or non-mobile computing device operated by a user and/or by the administrator. Admin device 111 may, for example, represent a workstation, a laptop or notebook computer, a desktop computer, a tablet computer, or any other computing device that may be operated by a user and/or present a user interface in accordance with one or more aspects of the present disclosure. Admin device 111 may be physically separate from and/or in a different location than NMS 130 such that admin device 111 may communicate with NMS 130 via network 104 or other means of communication.

In some examples, one or more of the network access devices, e.g., APs 142, switches 146, and/or routers 147, may connect to edge devices or tunnel terminators (not shown in FIG. 1A) associated with NMS 130 via physical cables, e.g., Ethernet cables. The edge devices may comprise cloud-managed, wireless LAN controllers. Each edge device may comprise an on-premises device at a site 102 that is in communication with NMS 130 to extend certain microservices from NMS 130 to the on-premises network access devices 108 while using NMS 130 and its distributed software architecture for scalable and resilient operations, management, troubleshooting, and analytics.

Each one of the network devices of network system 100, e.g., servers 110, 116, 122 and/or 128, APs 142, UEs 148, switches 146, routers 147, and any other servers or devices attached to or forming part of network system 100, may include a system log or an error log module wherein each one of these network devices records the status of the network device including normal operational status and error conditions. Throughout this disclosure, one or more of the network devices of network system 100, e.g., servers 110, 116, 122 and/or 128, APs 142, UEs 148, switches 146, and routers 147, may be considered "third-party" network devices when owned by and/or associated with a different entity than NMS 130 such that NMS 130 does not receive, collect, or otherwise have access to the recorded status and other data of the third-party network devices. In some examples, edge devices (not shown in FIG. 1A) on-premises at site 102 may provide a proxy through which the recorded status and other data of the third-party network devices may be reported to NMS 130.

In some examples, NMS 130 monitors network data 135, e.g., client level statistics, radio statistics, transmission statistics, event data, and/or one or more service level expectation (SLE) metrics, received from wireless networks 106A-106N at each site 102A-102N, respectively, and manages network resources, such as APs 142 at each site, to deliver a high-quality wireless experience to end users, IoT devices and clients at the site. For example, NMS 130 may include a virtual network assistant (VNA) 133 that implements an event processing platform for providing real-time insights and simplified troubleshooting for IT operations, and that automatically takes corrective action or provides recommendations to proactively address wireless network issues. VNA 133 may, for example, include an event processing platform configured to process hundreds or thousands of concurrent streams of network data 135 from sensors and/or agents associated with APs 142 and/or nodes within network 104. For example, VNA 133 of NMS 130 may include an underlying analytics and network error identification engine and alerting system in accordance with various examples described herein. The underlying analytics engine of VNA 133 may apply historical data and models, e.g., one or more of AI models 138, to the inbound event streams to compute inferences and assertions, such as identified anomalies or predicted occurrences of events constituting network issues. Further, VNA 133 may provide real-time alerting and reporting to notify a site or network administrator via admin device 111 of any predicted events, anomalies, trends, and may perform root cause analysis, e.g., using root cause engine 136, and automated or assisted issue remediation. In some examples, VNA 133 of NMS 130 may apply machine learning techniques, e.g., one or more of AI models 138, to identify the root cause of error conditions detected or predicted from the streams of network data 135. If the root cause may be automatically resolved, VNA 133 may invoke one or more corrective actions to correct the root cause of the issue, thus automatically improving the underlying SLE metrics and also automatically improving the user experience.

Further example details of operations implemented by the VNA 133 of NMS 130 are described in U.S. Patent No. 9,832,082, issued November 28, 2017, and entitled "Monitoring Wireless Access Point Events," U.S. Patent No. 11,570,038, issued January 31, 2023, and entitled "Network System Fault Resolution Using a Machine Learning Model," U.S. Patent No. 10,985,969, issued April 20, 2021, and entitled "Systems and Methods for a Virtual Network Assistant," U.S. Patent No. 10,958,585, issued March 23, 2021, and entitled "Methods and Apparatus for Facilitating Fault Detection and/or Predictive Fault Detection," U.S. Patent No. 10,958,537, issued March 23, 2021, and entitled "Method for Spatio-Temporal Modeling," U.S. Patent No. 11,743,151, issued August 29, 2023, and entitled "Virtual Network Assistant Having Proactive Analytics and Correlation Engine using Unsupervised ML Model," and U.S. Patent No. 12,088,453, issued September 10, 2024, and entitled "Network Anomaly Detection and Mitigation," all of which are incorporated herein by reference in their entirety.

In operation, NMS 130 observes, collects and/or receives network data 135, which may take the form of data extracted from messages, counters, and statistics, for example. In accordance with one specific implementation, a computing device is part of NMS 130. In accordance with other implementations, NMS 130 may comprise one or more computing devices, dedicated servers, virtual machines, containers, services, or other forms of environments for performing the techniques described herein. Similarly, computational resources and components implementing VNA 133 may be part of the NMS 130, may execute on other servers or execution environments, or may be distributed to nodes within network 104 (e.g., routers, switches, controllers, gateways, and the like).

VNA 133 of cloud-based NMS 130 may provide powerful processing to perform artificial intelligence (AI)-based inferences and root cause analyses based on data obtained for the plurality of network access devices 108, such as APs 142, switches 146, and/or routers 147. However, sending large amounts of data from network access devices 108 at sites 102 over network 104 to cloud-based NMS 130 comes at a high cost in terms of latency and loss of granularity. For example, to enable relatively timely upload of data monitored at each of network access devices 108 to NMS 130 over network 104, a data package cannot include all of the data at the particular one of network access devices 108. In addition, the uploaded data cannot be obtained by NMS 130 in real time. As such, AI processing of network access device data at NMS 130 may suffer from more than an hour of latency that cannot be reduced down to the frequency or granularity of the data locally accessible at the network access devices 108 themselves.

In accordance with one or more techniques of this disclosure, NMS 130 and one or more of network access devices 108 coordinate, over network 104, to perform AI processing of locally accessible data at one or more network access devices 108 at the network edge. A network access device, e.g., AP 142A-1, may access, from NMS 130, one or more model parameters (e.g., weights and/or biases) of one of AI models 138 trained on data for the plurality of network access devices. In some examples, an AI model scheduler 134 of NMS 130 may assign the one of AI models 138 to AP 142A-1 and send or push a message to AP 142A-1 via a secure connection over network 104, the message including the model parameters of the one of AI models 138 and instructions to cause AP 142A-1 to generate or load a local version of the AI model corresponding to the model parameters, e.g., AI model 145A-1, onto processing circuitry of AP 142A-1.

An inference engine 144A-1 of AP 142A-1 may then determine, using AI model 145A-1 running on the processing circuitry of AP 142A-1, one or more inferences based on data locally accessible at AP 142A-1. The inferences may be inferences of future performance in terms of throughput, latency, and/or end user experience based on a full set of real time data or near-real time data locally accessible at the network access device. The data locally accessible at AP 142A-1 may include real time or near-real time client level statistics (e.g., RSSI), radio statistics (e.g., channel capacity), transmission statistics, and event data. In some examples, AP 142A-1 may also obtain one or more network parameters 137 indicative of performance of the network from NMS 130 or, in other examples, from another network device over network 104. Network parameters 137 may comprise non-real time site-level parameters, such as WAN bandwidth, to which AP 142A-1 does not have local access but that generally have a low frequency of change, e.g., daily, weekly, or monthly, compared to the near-constantly changing data monitored at AP 142A-1. In some examples, AP 142A-1 may use both the locally accessible data and the obtained network parameters as input to AI model 145A-1. AP 142A-1 may send an indication of the determined inferences output from AI model 145A-1 to NMS 130 over network 104.

The techniques of this disclosure provide one or more technical advantages and practical applications. As one example, because the AI processing is co-located with the data locally accessible at network access devices 108, the AI model running on the network access device, e.g., AI model 145A-1 on AP 142A-1, is able to determine inferences with a high rate of frequency or granularity. In some scenarios, if an issue is inferred by the AI processing at the network access device, e.g., AP 142A-1, then AP 142A-1 itself may use AI model 145A-1 to perform root cause analysis of the issue and/or perform an action to remediate the issue. It may be beneficial to perform the root cause analysis at the network access devices 108 themselves such that the analysis can be run with the full set of data from which the issue was inferred. As such, the disclosed techniques significantly reduce latency and improve granularity associated with inferring future performance issues at network access devices by pushing the AI processing to network access devices 108 at the network edge while training, updating, or otherwise maintaining the AI models 138 used for the AI processing at NMS 130.

As another example, the disclosed techniques may push some AI processing to the network edge to be co-located with the data being processed while still performing more resource-intensive AI processing, e.g., root cause analyses, or higher-level AI processing, e.g., scope analyses, at NMS 130. In some scenarios, if an issue is inferred by the AI processing at one of network access devices 108, the network access device, e.g., AP 142A-1, may send an indication of the inferred issue and a package of the data from which the issue was inferred to NMS 130 over network 104. Root cause engine 136 of NMS 130 may then use a version of the AI model, e.g., one of AI models 138, at NMS 130 to perform root cause analysis of the issue based on the obtained data and/or generate instructions to cause the network access device, e.g., AP 142A-1, or another network device to perform an action to remediate the issue. It may be beneficial to perform the root cause analysis at NMS 130 to offload larger processing jobs from network access devices 108 themselves and, potentially, to aggregate the data obtained from network access devices 108 within a group, site, region, or organization for root cause analysis and/or scope analysis. In these examples, the inferred issue at one of network access devices 108, e.g., AP 142A-1, may act as a trigger such that a large amount of data is only transmitted over network 104 to NMS 130 for more advanced processing if an issue is first inferred at AP 142A-1. As such, the disclosed techniques provide an intelligent solution for cloud-based network management that balances the competing concerns of data transmission costs (e.g., in terms of latency and granularity) and processing costs (e.g., in terms of resources and device costs).

Although the techniques of the present disclosure are described in this example as performed by NMS 130, techniques described herein may be performed by any other computing device(s), system(s), and/or server(s), and that the disclosure is not limited in this respect. For example, one or more computing device(s) configured to execute the functionality of the techniques of this disclosure may reside in a dedicated server or be included in any other server in addition to or other than NMS 130, or may be distributed throughout network 100, and may or may not form a part of NMS 130.

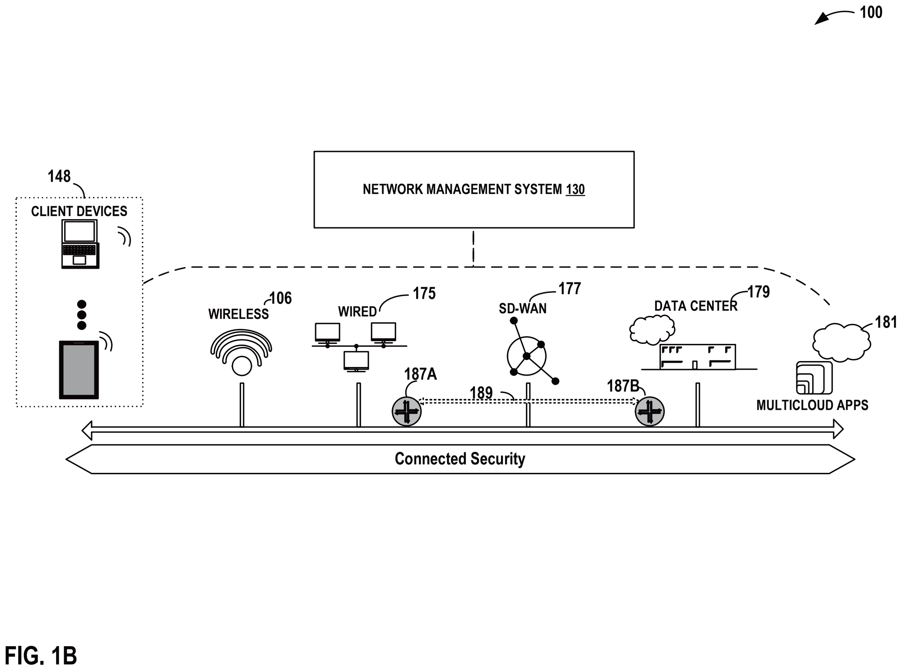

FIG. 1B is a block diagram illustrating further example details of the network system of FIG. 1A. In this example, FIG. 1B illustrates NMS 130 configured to operate according to an artificial intelligence / machine-learning-based computing platform providing comprehensive automation, insight, and assurance (WiFi Assurance, Wired Assurance and WAN assurance) spanning from "client," e.g., user devices 148 connected to wireless network 106 and wired LAN 175 (far left of FIG. 1B), to "cloud," e.g., cloud-based application services 181 that may be hosted by computing resources within data centers 179 (far right of FIG. 1B).

As described herein, NMS 130 provides an integrated suite of management tools and implements various techniques of this disclosure. In general, NMS 130 may provide a cloud-based platform for wireless network data acquisition, monitoring, activity logging, reporting, predictive analytics, network anomaly identification, and alert generation. For example, network management system 130 may be configured to proactively monitor and adaptively configure network 100 so as to provide self-driving capabilities. Moreover, VNA 133 includes a natural language processing engine to provide Al-driven support and troubleshooting, anomaly detection, AI-driven location services, and AI-driven radio frequency (RF) optimization with reinforcement learning.

As illustrated in the example of FIG. 1B, AI-driven NMS 130 also provides configuration management, monitoring and automated oversight of software defined wide-area network (SD-WAN) 177, which operates as an intermediate network communicatively coupling wireless networks 106 and wired LANs 175 to data centers 179 and application services 181. In general, SD-WAN 177 provides seamless, secure, traffic-engineered connectivity between "spoke" routers 187A of wired networks 175 hosting wireless networks 106, such as branch or campus networks, to "hub" routers 187B further up the cloud stack toward cloud-based application services 181. SD-WAN 177 often operates and manages an overlay network on an underlying physical Wide-Area Network (WAN), which provides connectivity to geographically separate customer networks. In other words, SD-WAN 177 extends Software-Defined Networking (SDN) capabilities to a WAN and allows networks to decouple underlying physical network infrastructure from virtualized network infrastructure and applications such that the networks may be configured and managed in a flexible and scalable manner.

In some examples, underlying routers of SD-WAN 177 may implement a stateful, session-based routing scheme in which the routers 187A, 187B dynamically modify contents of original packet headers sourced by client devices 148 to steer traffic along selected paths, e.g., path 189, toward application services 181 without requiring use of tunnels and/or additional labels. In this way, routers 187A, 187B may be more efficient and scalable for large networks since the use of tunnel-less, session-based routing may enable routers 187A, 187B to achieve considerable network resources by obviating the need to perform encapsulation and decapsulation at tunnel endpoints. Moreover, in some examples, each router 187A, 187B may independently perform path selection and traffic engineering to control packet flows associated with each session without requiring use of a centralized SDN controller for path selection and label distribution. In some examples, routers 187A, 187B implement session-based routing as Secure Vector Routing (SVR), provided by Juniper Networks, Inc.

In some examples, AI-driven NMS 130 may enable intent-based configuration and management of network system 100, including enabling construction, presentation, and execution of intent-driven workflows for configuring and managing devices associated with wireless networks 106, wired LAN networks 175, and /or SD-WAN 177. For example, declarative requirements express a desired configuration of network components without specifying an exact native device configuration and control flow. By utilizing declarative requirements, what should be accomplished may be specified rather than how it should be accomplished. Declarative requirements may be contrasted with imperative instructions that describe the exact device configuration syntax and control flow to achieve the configuration. By utilizing declarative requirements rather than imperative instructions, a user and/or user system is relieved of the burden of determining the exact device configurations required to achieve a desired result of the user/system such that management and configuration of the network devices becomes more efficient. Further example details and techniques of an intent-based network management system are described in U.S. Patent No. 10,756,983, entitled "Intent-based Analytics," and U.S. Patent No. 10,992,543, entitled "Automatically generating an intent-based network model of an existing computer network," each of which is hereby incorporated by reference.

In accordance with the techniques described in this disclosure, instead of exclusively performing AI processing of network data obtained from network devices of wireless network networks 106, wired networks 175, and/or SD-WAN 177 at NMS 130, NMS 130 coordinates with one or more of network access devices of wireless networks 106 to push at least a portion of the AI processing to the network edge. For example, NMS 130 may train, update, and otherwise maintain AI models for assignment and distribution to network access devices, e.g., APs 142, switches 146, and/or routers 147 of FIG. 1A, of wireless networks 106. The network access devices perform AI processing of locally accessible data using local versions of the assigned and distributed AI models from NMS 130 to determine one or more inferences. The inferences may be inferences of future performance in terms of throughput, latency, and/or end user experience based on a full set of real time data or near-real time data locally accessible at the network access device. The network access devices then send indications of the determined inferences to NMS 130, e.g., for storage, further processing, and/or generation of notifications or remedial actions. The disclosed techniques significantly reduce latency and improve granularity associated with inferring future performance issues at network access devices by pushing the AI processing to network access devices at the network edge while training, updating, or otherwise maintaining the AI models used for the AI processing at NMS 130. In addition, the disclosed techniques provide an intelligent solution for cloud-based network management that balances the competing concerns of data transmission costs (e.g., in terms of latency and granularity) and processing costs (e.g., in terms of resources and device costs).

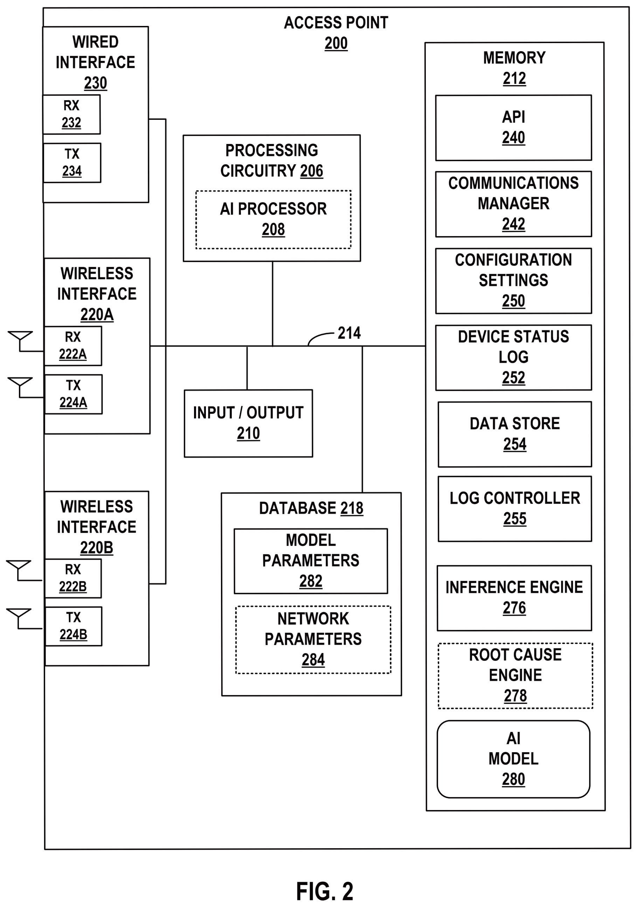

FIG. 2 is a block diagram of an example access point (AP) device 200, in accordance with one or more techniques of this disclosure. Example access point 200 shown in FIG. 2 may be used to implement any of APs 142 as shown and described herein with respect to FIG. 1A. Access point 200 may comprise, for example, a Wi-Fi, Bluetooth and/or Bluetooth Low Energy (BLE) base station or any other type of wireless access point.

In the example of FIG. 2, access point 200 includes a wired interface 230, wireless interfaces 220A-220B, processing circuitry 206, memory 212, input/output 210, and database 218 coupled together via a bus 214 over which the various elements may exchange data and information. Wired interface 230 represents a physical network interface and includes a receiver 232 and a transmitter 234 for sending and receiving network communications, e.g., packets. Wired interface 230 couples, either directly or indirectly, access point 200 to a wired network device, such as one of switches 146 of FIG. 1A, within the wired network via a cable, such as an Ethernet cable.

First and second wireless interfaces 220A and 220B, alternatively referred to as "radios," represent wireless network interfaces and include receivers 222A and 222B, respectively, each including a receive antenna via which access point 200 may receive wireless signals from wireless communications devices, such as UEs 148 of FIG. 1A. First and second wireless interfaces 220A and 220B further include transmitters 224A and 224B, respectively, each including transmit antennas via which access point 200 may transmit wireless signals to wireless communications devices, such as UEs 148 of FIG. 1A. In some examples, first wireless interface 220A may include a Wi-Fi 802.11 interface (e.g., 2.4 GHz, 5 GHz and/or 6 GHz) and second wireless interface 220B may include a Bluetooth interface and/or a Bluetooth Low Energy (BLE) interface. In other examples, access point 200 may include two or more Wi-Fi 802.11 interfaces, each operating on a different wireless frequency band.

Processing circuitry 206 includes one or more programmable hardware-based processors configured to execute software instructions, such as those used to define a software or computer program, stored to and/or provided from a computer-readable medium such as a computer-readable storage medium, such as non-transitory computer-readable mediums including a storage device (e.g., a disk drive, or an optical drive) or a memory (such as Flash memory or RAM) or any other type of volatile or non-volatile memory, that stores instructions to cause processing circuitry 206 to perform the techniques described herein. In some examples, processing circuitry 206 may include a central processing unit (CPU) that is capable of running AI model 280 without additional hardware accelerators or other assistance. In other examples, processing circuitry 206 may include a CPU and a hardware AI processor 208 capable of running AI model 280. AI processor 208 may comprise a graphics processing unit (GPU), a neural processing unit (NPU), a tensor processing unit (TPU), an artificial intelligence unit (AIU), or another type of specialized processor designed to efficiently run AI models. In some scenarios, AI processor 208 may be considered a coprocessor or hardware accelerator working in coordination with a CPU or other processors of processing circuitry 206.

Memory 212 includes one or more devices configured to store programming modules and/or data associated with operation of access point 200. For example, memory 212 may include a computer-readable storage medium, such as non-transitory computer-readable mediums including a storage device (e.g., a disk drive, or an optical drive) or a memory (such as Flash memory or RAM) or any other type of volatile or non-volatile memory, that stores instructions to cause the one or more processing circuitry 206 to perform the techniques described herein. Database 218 includes one or more data storage structures configured to store data for use by access point 200, e.g., data received from NMS 130 for cloud-based management of access point 200.

In this example, memory 212 stores executable software including an application programming interface (API) 240, a communications manager 242, configuration settings 250, a device status log 252, a data store 254, a log controller 255, inference engine 276, and, in some examples, a root cause engine 278. Device status log 252 includes a list of events specific to access point 200. The events may include a log of both normal events and error events such as, for example, memory status, reboot or restart events, crash events, cloud disconnect with self-recovery events, low link speed or link speed flapping events, Ethernet port status, Ethernet interface packet errors, upgrade failure events, firmware upgrade events, configuration changes, etc., as well as a time and date stamp for each event. Log controller 255 determines a logging level for access point 200 based on instructions from NMS 130. Data store 254 may store any data used and/or generated by access point 200, including data collected from UEs 148, such as data used to calculate one or more SLE metrics, e.g., client-level statistics, radio statistics, and/or transmission statistics, that is transmitted by access point 200 for cloud-based management of wireless networks 106A by NMS 130.

Input/output (I/O) 210 represents physical hardware components that enable interaction with a user, such as buttons, a display, and the like. Although not shown, memory 212 typically stores executable software for controlling a user interface with respect to input received via I/O 210. Communications manager 242 includes program code that, when executed by processing circuitry 206, allow access point 200 to communicate with UEs 148 and/or network 104 via any of interface(s) 230 and/or 220A-220B. Configuration settings 250 include any device settings for access point 200 such as radio settings for each of wireless interface(s) 220A-220B. These settings may be configured manually or may be remotely monitored and managed by NMS 130 to optimize wireless network performance on a periodic (e.g., hourly or daily) basis.

As described herein, access point 200 may measure and report network data from device status log 252 and/or data store 254 to NMS 130. The network data may comprise event data, statistical data, and/or other SLE-related data. The network data may include various parameters indicative of the performance and/or status of the wireless network. The parameters may be measured and/or determined by one or more of the UE devices and/or by one or more of the APs in a wireless network. Access point 200 may periodically create a package of the statistical data according to a periodic interval, e.g., every 1-3 minutes, and send the package to NMS 130. Access point 200 may also monitor client state changes and other events and send asynchronous event data to NMS 130. To enable relatively timely uploading of the data, the package of statistical data cannot include all of the data at access point 200 and, instead, may be a portion or a sampling of the locally accessible data (e.g., sampled or captured every 3-10 seconds). In addition, the uploaded data, i.e., the statistical data and/or the event data, cannot be obtained by NMS 130 in real time. As such, AI-based processing of the uploaded data at NMS 130 may suffer from more than an hour of latency that cannot be reduced down to the frequency or granularity of the network data locally accessible at access point 200 itself.

In accordance with the disclosed techniques, access point 200 may operate as one of network access devices 108 of FIG. 1A, e.g., one of APs 142, and perform AI processing of locally accessible data at AP device 200 in coordination with NMS 130. For example, access point 200 may access, from NMS 130, model parameters 282 (e.g., weights and/or biases) of an AI model assigned to access point 200. Access point 200 may then generate or load a local version of the AI model corresponding to model parameters 282, e.g., AI model 280, onto processing circuitry 206, which may include AI processor 208 (e.g., a GPU, NPU, TPU, AIU, etc.).

Inference engine 276 of access point 200 may determine, using AI model 280 running on processing circuitry 206 and/or AI processor 208, one or more inferences based on data locally accessible at access point 200. The data locally accessible at access point 200 comprises the data included in device status log 252 and/or data store 254, which may include real time or near-real time client level statistics (e.g., RSSI), radio statistics (e.g., channel capacity), transmission statistics, and event data. Access point 200 may then send an indication of the one or more inferences to NMS 130 over network 104.

Inference engine 276 of access point 200 is able to determine inferences, using AI model 280, with a high rate of frequency or granularity because the AI processing is co-located with the data locally accessible at access point 200. In some examples, inference engine 276 may run AI model 280 on the data locally accessible at access point 200 according to a frequency of less than one minute. In further examples, inference engine 276 may run AI model 280 on real time data such that AI model 280 outputs inferences in near real time, e.g., each second. The inferences output from AI model 280 may be inferences of future performance in terms of throughput, latency, and/or end user experience, based on a full set of real time data or near-real time data locally accessible at access point 200.

In some scenarios, access point 200 may obtain one or more network parameters 284 indicative of performance of the network from NMS 130 or another network device over network 104. Network parameters 284 may comprise non-real time site-level parameters, such as WAN bandwidth, to which access point 200 does not have local access. Network parameters 284 may generally have a low frequency of change, e.g., daily, weekly, or monthly, compared to the near-constantly changing data monitored at access point 200, e.g., data included in device status log 252 and/or data store 254. Access point 200 may obtain updates to network parameters 284 based on changes to the parameters observed by NMS 130 or another network device. Inference engine 276 may use both the locally accessible data and network parameters 284 as input to AI model 280 to determine the one or more inferences.

The one or more inferences output from AI model 280 may comprise inferred values of one or more parameters at access point 200. Inference engine 276 may determine that the one or more inferences indicate an issue at access point 200 based on at least one of the inferred values being outside a desirable range or failing to satisfy a threshold. In addition to the indication of the one or more inferences, access point 200 may send an indication of the determined issue to NMS 130 over network 104.

In some examples, access point 200 includes root cause engine 278 configured to perform root cause analysis of an issue inferred by inference engine 276 of access point 200. Root cause engine 278 may use AI model 280 to perform the root cause analysis at access point 200 itself such that the analysis can be run with the full set of data from which the issue was inferred, e.g., data included in device status log 252 and/or data store 254. For example, inference engine 276 may perform a Shapley analysis by running AI model 280 multiple times with different parameters to determine contributions of the different parameters to the inferred issue. Access point 200 may then send an indication of the issue and the root cause of the issue to NMS 130 over network 104. Based on the one or more inferences and/or the determined issue, access point 200 itself may automatically modify a configuration of access point 200, e.g., one of configuration settings 250. Shapley analysis is described in more detail in U.S. Patent Publication No. 2024/0364581, published October 31, 2024, the entire content of which is incorporated herein by reference.

In other examples, access point 200 may send the indication of the determined issue to NMS 130 over network 104 along with a package of the data from which the issue was inferred. The package may include all of the data used as input to AI model 280 from which the anomalous parameter values were inferred. In other cases, the package may include a portion or sampling of the data used to infer the issue. Based on the indication of the determined issue and the package of data, NMS 130 may then use a version of the AI model at NMS 130 to perform root cause analysis of the issue. Access point 200 may obtain instructions from NMS 130 over network 104 to automatically modify a configuration of access point 200, e.g., one of configuration settings 250, based on the one or more inferences and/or the determine issue included in the indication sent to NMS 130.

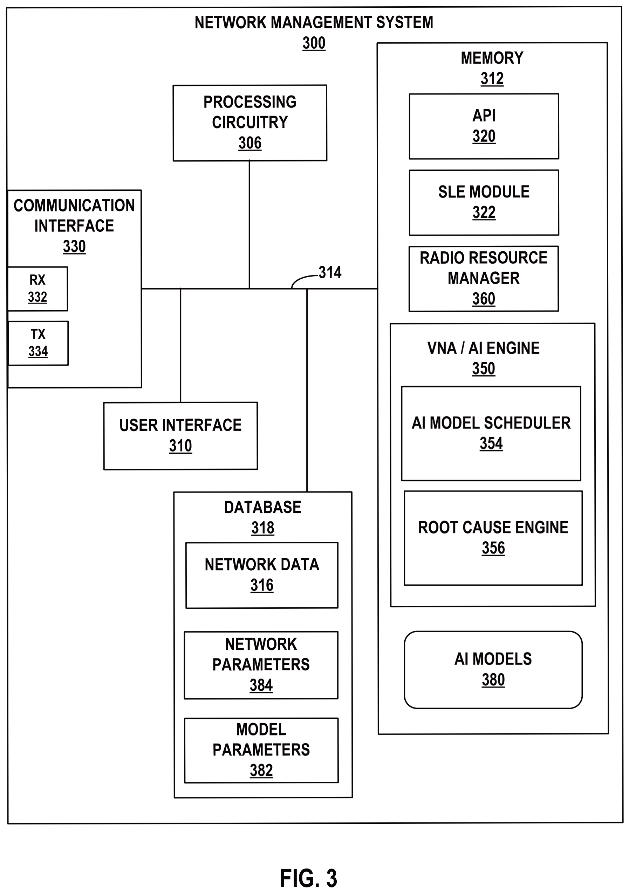

FIG. 3 is a block diagram of an example network management system (NMS) 300, in accordance with one or more techniques of the disclosure. NMS 300 may be used to implement, for example, NMS 130 in FIGS. 1A-1B. In such examples, NMS 300 is responsible for monitoring and management of one or more wireless networks 106A-106N at sites 102A-102N, respectively.

NMS 300 includes a communications interface 330, processing circuitry 306, a user interface 310, a memory 312, and a database 318. The various elements are coupled together via a bus 314 over which the various elements may exchange data and information. In some examples, NMS 300 receives data from one or more of client devices 148, network access devices 108 (such as APs 142, switches 146, and/or routers 147), and other network nodes within network 104, e.g., routers 187 of FIG. 1B, which may be used to calculate one or more SLE metrics and/or update network data 316 in database 318. NMS 300 analyzes this data for cloud-based management of wireless networks 106A-106N. In some examples, NMS 300 may be part of another server shown in FIG. 1A or a part of any other server.

Processing circuitry 306 executes software instructions, such as those used to define a software or computer program, stored to and/or provided from a computer-readable medium such as a computer-readable storage medium, such as non-transitory computer-readable mediums including a storage device (e.g., a disk drive, or an optical drive) or a memory (such as Flash memory or RAM) or any other type of volatile or non-volatile memory, that stores instructions to cause processing circuitry 306 to perform the techniques described herein.

Communications interface 330 may include, for example, an Ethernet interface. Communications interface 330 couples NMS 300 to a network and/or the Internet, such as network 104 as shown in FIG. 1A, and/or any local area networks. Communications interface 330 includes a receiver 332 and a transmitter 334 by which NMS 300 receives/transmits data and information to/from any of client devices 148, network access devices 108 (such as APs 142, switches 146, and/or routers 147), servers 110, 116, 122, 128, and/or any other network nodes, devices, or systems forming part of network system 100 such as shown in FIG. 1A. In some scenarios described herein in which network system 100 includes "third-party" network devices that are owned and/or associated with different entities than NMS 300, NMS 300 does not receive, collect, or otherwise have access to network data from the third-party network devices.

The data and information received by NMS 300 may include, for example, telemetry data, SLE-related data, or event data received from one or more of client devices 148, network access devices 108 (such as APs 142, switches 146, and/or routers 147), or other network nodes, e.g., routers 187 of FIG. 1B, used by NMS 300 to remotely monitor the performance of wireless networks 106A-106N and application sessions from client device to cloud-based application server. NMS 300 may further transmit data via communications interface 330 to any of client devices 148, network access devices 108 (such as APs 142, switches 146, and/or routers 147), other network nodes within network 104 to remotely manage wireless networks 106A-106N and portions of the wired network.

Memory 312 includes one or more devices configured to store programming modules and/or data associated with operation of NMS 300. For example, memory 312 may include a computer-readable storage medium, such as a non-transitory computer-readable medium including a storage device (e.g., a disk drive, or an optical drive) or a memory (such as Flash memory or RAM) or any other type of volatile or non-volatile memory, that stores instructions to cause processing circuitry 306 to perform the techniques described herein. Database 318 includes one or more data storage structures configured to store data for use by NMS 130 for cloud-based management of wireless networks 106A-106N and portions of the wired network.

In the illustrated example, memory 312 includes an API 320, an SLE module 322, a virtual network assistant (VNA)/AI engine 350, and a radio resource management (RRM) engine 360. In accordance with the disclosed techniques, VNA/AI engine 350 includes AI model scheduler 354 and root cause engine 356. NMS 300 may also include any other programmed modules, software engines and/or interfaces configured for remote monitoring and management of wireless networks 106A-106N and portions of the wired network, including remote monitoring and management of any of APs 142/200, switches 146, routers 147, or other network devices, e.g., routers 187 of FIG. 1B.

SLE module 322 enables set up and tracking of thresholds for SLE metrics for each network 106A-106N. SLE module 322 further analyzes SLE-related data collected by APs, such as any of APs 142, from UEs in each wireless network 106A-106N. For example, APs 142A-1 through 142A-N collect SLE-related data from UEs 148A-1 through 148A-N currently connected to wireless network 106A. This data is transmitted to NMS 300, which executes by SLE module 322 to determine one or more SLE metrics for each UE 148A-1 through 148A-N currently connected to wireless network 106A. This data, in addition to any network data collected by one or more APs 142A-1 through 142A-N in wireless network 106A, is transmitted to NMS 300 and stored as, for example, network data 316 in database 318.

RRM engine 360 monitors one or more metrics for each site 102A-102N in order to learn and optimize the radio frequency (RF) environment at each site. For example, RRM engine 360 may monitor the coverage and capacity SLE metrics for a wireless network 106 at a site 102 in order to identify potential issues with SLE coverage and/or capacity in the wireless network 106 and to make adjustments to the radio settings of the access points at each site to address the identified issues. For example, RRM engine may determine channel and transmit power distribution across all APs 142 in each network 106A-106N. For example, RRM engine 360 may monitor events, power, channel, bandwidth, and number of clients connected to each AP. RRM engine 360 may further automatically change or update configurations of one or more APs 142 at a site 102 with an aim to improve the coverage and capacity SLE metrics and thus to provide an improved wireless experience for the user.

VNA/AI engine 350 analyzes data received from network devices as well as its own data to identify when undesired or abnormal states are encountered at one of the network devices. For example, VNA/AI engine 350 may identify the root cause of any undesired or abnormal states, e.g., any poor SLE metric(s) indicative of connection issues at one or more network devices. In addition, VNA/AI engine 350 may automatically invoke one or more corrective actions intended to address the identified root cause(s) of one or more poor SLE metrics. Examples of corrective actions that may be automatically invoked by VNA/AI engine 350 may include, but are not limited to, invoking RRM 360 to reboot one or more APs, adjusting/modifying the transmit power of a specific radio in a specific AP, adding SSID configuration to a specific AP, reassigning channels to radios of an AP or a set of APs, etc. The corrective actions may further include restarting a switch and/or a router, invoking download of new software to an AP, switch, or router, etc. These corrective actions are given for example purposes only, and the disclosure is not limited in this respect. If automatic corrective actions are not available or do not adequately resolve the root cause, VNA/AI engine 350 may proactively provide a notification including recommended corrective actions to be taken by IT personnel, e.g., a site or network administrator using admin device 111, to address the network error.

As described above, VNA/AI engine 350 may provide powerful processing to perform AI-based inferences and root cause analyses based on network data 316. Sending large amounts of data from network access devices 108 on premise at sites 102 to the cloud, however, comes at a high cost in terms of latency and loss of granularity. For example, to enable relatively timely upload of data monitored at each network access device 108 to NMS 300, a data package cannot include all of the data at the network access device. In addition, the uploaded data cannot be obtained by NMS 300 in real time. As such, AI processing of network data 316 at NMS 300 may suffer from more than an hour of latency that cannot be reduced down to the frequency or granularity of the data locally accessible at network access devices 108.

In accordance with one or more techniques of this disclosure, AI model scheduler 354 of NMS 300 is configured to push at least a portion of the AI-based processing conventionally performed by VNA/AI engine 350 to one or more network access devices 108 at the network edge. In this way, one or more of network access devices 108 perform AI-based inferences, and in some examples root cause analyses, on the full set of data locally accessible at network access devices 108 in coordination with NMS 300.

VNA/AI engine 350 may train, or manage training of, one or more of AI models 380 based on data for a plurality of network access devices 108 at each of sites 102 or across sites 102. In some examples, AI models 380 may comprise at least one supervised machine learning model that is trained, using training data comprising pre-collected, labeled network data received from network devices (e.g., client devices, APs, switches, routers, and/or other network nodes). The supervised AI model may comprise one of a logistical regression, naive Bayesian, support vector machine (SVM), or the like. In other examples, AI models 380 may comprise at least one unsupervised machine learning model. Although not shown in FIG. 3, in some examples, database 318 may store the training data for the one or more of AI models 380. VNA/AI engine 350, or a dedicated training module, may be configured to train one or more of AI models 380 based on the training data to determine appropriate model parameters 382 (e.g., weights and/or biases) of each of AI models 380 based on the one or more features of the training data.

AI model scheduler 354 assigns one or more of AI models 380 to one or more network access devices 108. For example, AI model scheduler 354 may assign one of AI models 380 to an AP, e.g., one of APs 142 or AP 200, based on one or more of a type of data locally accessible at the AP, a quantity of data locally accessible at the AP, or an issue identified at the AP. AI model scheduler 354 may synchronously (e.g., hourly, daily, weekly, monthly, or the like) or asynchronously (e.g., based on a triggering event) initiate distribution of model parameters 382 of the one or more of AI models 380 to the assigned one or more network access devices 108. For example, AI model scheduler 354 may distribute or push a message to the AP that includes model parameters 382 of one of AI models 380 assigned to the AP and instructions to cause the AP to generate or load a version of the AI model corresponding to model parameters 382 of the one of AI models 380 onto processing circuitry of the AP.

In some examples, AI model scheduler 354 may synchronously or asynchronously initiate retraining of the one or more of AI models 380 by NMS 130. As one example, AI model scheduler 354 may initiate retaining of at least one of AI models 380 on an hourly, daily, weekly, monthly, or annual basis. As another example, AI model scheduler 354 may initiate retraining of at least one of AI models 380 based on detection of data drift, reduced accuracy, or other performance issues associated with the AI model at NMS 300 or a version of the AI model at one of network access devices 108.

NMS 300 may send network parameters 384 to the one or more network access devices 108 for use along with the locally accessible data in determining one or more AI-based inferences. Network parameters 384 may comprise non-real time site-level parameters, such as WAN bandwidth, that are indicative of performance of the network and to which network access devices 108 do not have local access. NMS 300 may synchronously or asynchronously update network parameters 384 based on changes to the one or more network parameters 384 observed by NMS 300. For example, NMS 300 may dynamically send or push updated network parameters 384 to network access devices 108 as the network parameters change. Network parameters 384 may generally have a lower frequency of change, e.g., daily, weekly, or monthly, compared to the near-constantly changing data locally accessible at network access devices 108.

NMS 300 may obtain an indication of one or more inferences determined by the assigned AI model running on one of network access devices 108. In some cases, NMS 300 may also obtain an indication of an issue determined by the one of network access devices 108 based on the one or more inferences. For example, VNA/AI engine 350 may perform additional processing based on the one or more inferences and/or the determined issue obtained from an AP, e.g., one of APs 142 or AP 200, such as aggregating inferences across APs or other network access devices within a group, site, region, or organization, correlating the inferences with configuration changes or other events, performing root cause analysis of the issue determined from the one or more inferences, and/or performing scope analysis of the determined issue. In some examples, based on the one or more inferences and/or the determined issue included in the indication obtained from the AP, VNA/AI engine 350 may generate and send instructions to automatically modify a configuration of the AP, or other network devices or components, over network 104. In further examples, VNA/AI engine 350 may generate a notification for display, e.g., on admin device 111, that includes an insight or recommended action based the one or more inferences and/or the determined issue included in the indication obtained from the AP.

In some scenarios, NMS 300 may further obtain, with the indication of the one or more inferences and the determined issue, a package of the data used to infer the issue at the one of the network access devices 108. Root cause engine 356 of NMS 300 may then perform root cause analysis of the reported issue by determining contributions of different parameters of the data included in the package to the issue using the one of AI models 380 assigned to the one of network access devices 108. For example, root cause engine 356 may perform a Shapley analysis by running the one of AI models 380 multiple times with different parameters to determine a root cause of the issue. In this scenario, the inferred issue at the one of network access devices 108 may act as a trigger such that a large amount of data is only transmitted over network 104 to NMS 300 for more advanced processing if an issue is first inferred at one of network access devices 108.

Although the techniques of the present disclosure are described in this example as performed by NMS 130, techniques described herein may be performed by any other computing device(s), system(s), and/or server(s), and that the disclosure is not limited in this respect. For example, one or more computing device(s) configured to execute the functionality of the techniques of this disclosure may reside in a dedicated server or be included in any other server in addition to or other than NMS 130, or may be distributed throughout network 100, and may or may not form a part of NMS 130.

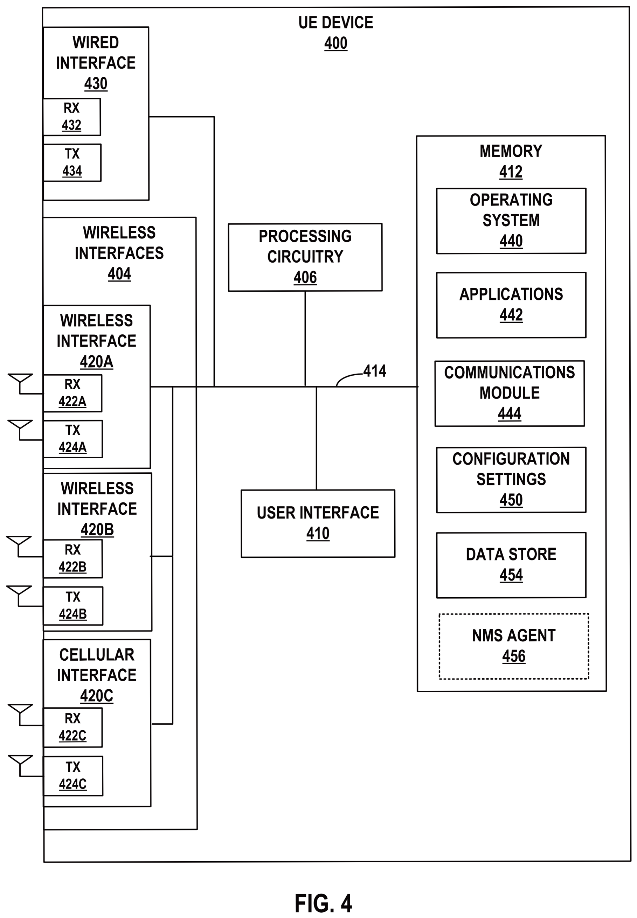

FIG. 4 shows an example user equipment (UE) device 400, in accordance with one or more techniques of this disclosure. Example UE device 400 shown in FIG. 4 may be used to implement any of UEs 148 as shown and described herein with respect to FIG. 1A. UE device 400 may include any type of wireless client device, and the disclosure is not limited in this respect. For example, UE device 400 may include a mobile device such as a smart phone, tablet or laptop computer, a personal digital assistant (PDA), a wireless terminal, a smart watch, a smart ring, or any other type of mobile or wearable device. In some examples, UE 400 may also include a wired client-side device, e.g., an IoT device such as a printer, a security sensor or device, an environmental sensor, or any other device connected to the wired network and configured to communicate over one or more wireless networks.

UE device 400 includes a wired interface 430, wireless interfaces 420A-420C, processing circuitry 406, memory 412, and a user interface 410. The various elements are coupled together via a bus 414 over which the various elements may exchange data and information. Wired interface 430 represents a physical network interface and includes a receiver 432 and a transmitter 434. Wired interface 430 may be used, if desired, to couple, either directly or indirectly, UE 400 to a wired network device, such as one of switches 146 of FIG. 1A, within the wired network via a cable, such as one of Ethernet cables 144 of FIG. 1A.

First, second and third wireless interfaces 420A, 420B, and 420C include receivers 422A, 422B, and 422C, respectively, each including a receive antenna via which UE 400 may receive wireless signals from wireless communications devices, such as APs 142 of FIG. 1A, AP 200 of FIG. 2, other UEs 148, or other devices configured for wireless communication. First, second, and third wireless interfaces 420A, 420B, and 420C further include transmitters 424A, 424B, and 424C, respectively, each including transmit antennas via which UE 400 may transmit wireless signals to wireless communications devices, such as APs 142 of FIG. 1A, AP 200 of FIG. 2, other UEs 148 and/or other devices configured for wireless communication. In some examples, first wireless interface 420A may include a Wi-Fi 802.11 interface (e.g., 2.4 GHz and/or 5 GHz) and second wireless interface 420B may include a Bluetooth interface and/or a Bluetooth Low Energy interface. Third wireless interface 420C may include, for example, a cellular interface through which UE device 400 may connect to a cellular network.

Processing circuitry 406 executes software instructions, such as those used to define a software or computer program, stored to and/or provided from a computer-readable medium such as a computer-readable storage medium, such as non-transitory computer-readable mediums including a storage device (e.g., a disk drive, or an optical drive) or a memory (such as Flash memory or RAM) or any other type of volatile or non-volatile memory, that stores instructions to cause processing circuitry 406 to perform the techniques described herein.

Memory 412 includes one or more devices configured to store programming modules and/or data associated with operation of UE 400. For example, memory 412 may include a computer-readable storage medium, such as non-transitory computer-readable mediums including a storage device (e.g., a disk drive, or an optical drive) or a memory (such as Flash memory or RAM) or any other type of volatile or non-volatile memory, that stores instructions to cause processing circuitry 406 to perform the techniques described herein.

In this example, memory 412 includes an operating system 440, applications 442, a communications module 444, configuration settings 450, and data store 454. Communications module 444 includes program code that, when executed by processing circuitry 406, enables UE 400 to communicate using any of wired interface(s) 430, wireless interfaces 420A-420B and/or cellular interface 450C. Configuration settings 450 include any device settings for UE 400 settings for each of wireless interface(s) 420A-420B and/or cellular interface 420C.

Data store 454 may include, for example, a status/error log including a list of events specific to UE 400. The events may include a log of both normal events and error events according to a logging level based on instructions from NMS 130. Data store 454 may store any data used and/or generated by UE 400, such as data used to calculate one or more SLE metrics or identify relevant behavior, that is collected by UE 400 and either transmitted directly to NMS 130 or transmitted to any of APs 142 in a wireless network 106 for further transmission to NMS 130.

As described herein, UE 400 may measure and report network data from data store 454 to NMS 130. The network data may comprise event data, telemetry data, and/or other SLE-related data. The network data may include various parameters indicative of the performance and/or status of the wireless network. NMS 130 may determine one or more SLE metrics and store the SLE metrics as network data 135 (FIG. 1A) based on the SLE-related data received from the UEs or client devices in the wireless network.

Optionally, UE device 400 may include an NMS agent 456. NMS agent 456 is a software agent of NMS 130 that is installed on UE 400. In some examples, NMS agent 456 can be implemented as a software application running on UE 400. NMS agent 456 collects information including detailed client-device properties from UE 400, including insight into UE 400 roaming behaviors. The information provides insight into client roaming algorithms, because roaming is a client device decision. In some examples, NMS agent 456 may display the client-device properties on UE 400. NMS agent 456 sends the client device properties to NMS 130, via an AP device to which UE 400 is connected. NMS agent 456 can be integrated into a custom application or as part of location application. NMS agent 456 may be configured to recognize device connection types (e.g., cellular or Wi-Fi), along with the corresponding signal strength. For example, NMS agent 456 recognizes access point connections and their corresponding signal strengths. NMS agent 456 can store information specifying the APs recognized by UE 400 as well as their corresponding signal strengths. NMS agent 456 or other element of UE 400 also collects information about which APs the UE 400 connected with, which also indicates which APs the UE 400 did not connect with. NMS agent 456 of UE 400 sends this information to NMS 130 via its connected AP. In this manner, UE 400 sends information about not only the AP that UE 400 connected with, but also information about other APs that UE 400 recognized and did not connect with, and their signal strengths. The AP in turn forwards this information to the NMS, including the information about other APs the UE 400 recognized besides itself. This additional level of granularity enables NMS 130, and ultimately network administrators, to better determine the Wi-Fi experience directly from the client device's perspective.

In some examples, NMS agent 456 further enriches the client device data leveraged in service levels. For example, NMS agent 456 may go beyond basic fingerprinting to provide supplemental details into properties such as device type, manufacturer, and different versions of operating systems. In the detailed client properties, the NMS 130 can display the Radio Hardware and Firmware information of UE 400 received from NMS client agent 456. The more details the NMS agent 456 can draw out, the better the VNA/AI engine gets at advanced device classification. The VNA/AI engine of the NMS 130 continually learns and becomes more accurate in its ability to distinguish between device-specific issues or broad device issues, such as specifically identifying that a particular OS version is affecting certain clients.

In some examples, NMS agent 456 may cause user interface 410 to display a prompt that prompts an end user of UE 400 to enable location permissions before NMS agent 456 is able to report the device's location, client information, and network connection data to the NMS. NMS agent 456 will then start reporting connection data to the NMS along with location data. In this manner, the end user of the client device can control whether the NMS agent 456 is enabled to report client device information to the NMS.

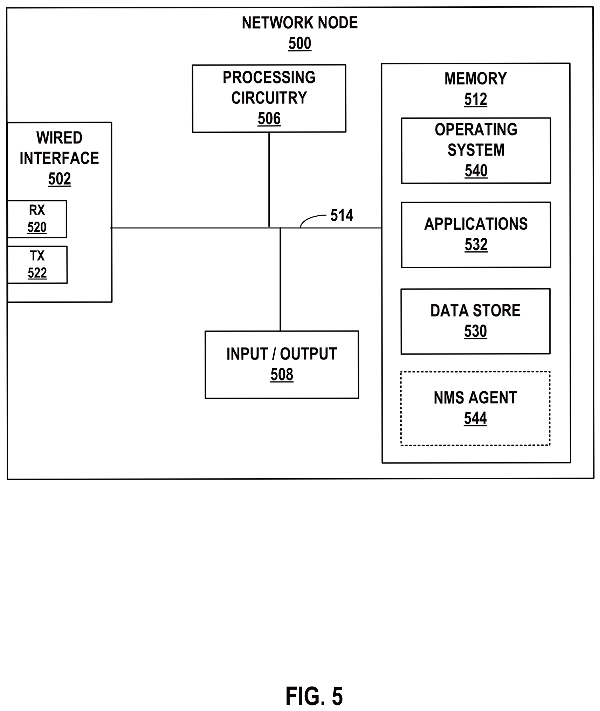

FIG. 5 is a block diagram illustrating an example network node 500, in accordance with one or more techniques of this disclosure. In one or more examples, the network node 500 implements a device or a server attached to the network 104 of FIG.1A, e.g., switches 146, AAA server 110, DHCP server 116, DNS server 122, web servers 128, etc., or another network device supporting one or more of wireless network 106, wired LAN 175, or SD-WAN 177, or data center 179 of FIG. 1B, e.g., routers 187.

In this example, network node 500 includes a wired interface 502, e.g., an Ethernet interface, processing circuitry 506, input/output 508, e.g., display, buttons, keyboard, keypad, touch screen, mouse, etc., and a memory 512 coupled together via a bus 514 over which the various elements may interchange data and information. Wired interface 502 couples the network node 500 to a network, such as an enterprise network. Though only one interface is shown by way of example, network nodes may, and usually do, have multiple communication interfaces and/or multiple communication interface ports. Wired interface 502 includes a receiver 520 and a transmitter 522.

Memory 512 stores executable software applications 532, operating system 540 and data store 530. Data store 530 may include a system log and/or an error log that stores event data, including behavior data, for network node 500. Data store 530 may store any data used and/or generated by network node 500. In examples where network node 500 comprises a "third-party" network device, the same entity does not own or have access to both the APs or wired client-side devices and network node 500. As such, in the example where network node 500 is a third-party network device, NMS 130 does not receive, collect, or otherwise have access to the network data in data store 530 of network node 500.

In examples where network node 500 comprises a server, network node 500 may receive data and information, e.g., including operation related information, e.g., registration request, AAA services, DHCP requests, Simple Notification Service (SNS) lookups, and Web page requests via receiver 520, and send data and information, e.g., including configuration information, authentication information, web page data, etc. via transmitter 522.

In examples where network node 500 comprises a wired network device, network node 500 may be connected via wired interface 502 to one or more APs or other wired client-side devices, e.g., IoT devices. For example, network node 500 may include multiple wired interfaces 502 and/or wired interface 502 may include multiple physical ports to connect to multiple APs or the other wired-client-side devices within a site via respective Ethernet cables. In some examples, each of the APs or other wired client-side devices connected to network node 500 may access the wired network via wired interface 502 of network node 500. In some examples, one or more of the APs or other wired client-side devices connected to network node 500 may each draw power from network node 500 via the respective Ethernet cable and a Power over Ethernet (PoE) port of wired interface 502.

In examples where network node 500 comprises a session-based router that employs a stateful, session-based routing scheme, network node 500 may be configured to independently perform path selection and traffic engineering. The use of session-based routing may enable network node 500 to eschew the use of a centralized controller, such as an SDN controller, to perform path selection and traffic engineering, and eschew the use of tunnels. In some examples, network node 500 may implement session-based routing as Secure Vector Routing (SVR), provided by Juniper Networks, Inc. In the case where network node 500 comprises a session-based router operating as a network gateway for a site of an enterprise network (e.g., router 187A of FIG. 1B), network node 500 may establish multiple peer paths (e.g., logical path 189 of FIG. 1B) over an underlying physical WAN (e.g., SD-WAN 177 of FIG. 1B) with one or more other session-based routers operating as network gateways for other sites of the enterprise network (e.g., router 187B of FIG. 1B). Network node 500, operating as a session-based router, may collect data at a peer path level, and report the peer path data to NMS 130.

In examples where network node 500 comprises a packet-based router, network node 500 may employ a packet- or flow-based routing scheme to forward packets according to defined network paths, e.g., established by a centralized controller that performs path selection and traffic engineering. In the case where network node 500 comprises a packet-based router operating as a network gateway for a site of an enterprise network (e.g., router 187A of FIG. 1B), network node 500 may establish multiple tunnels (e.g., logical path 189 of FIG. 1B) over an underlying physical WAN (e.g., SD-WAN 177 of FIG. 1B) with one or more other packet-based routers operating as network gateways for other sites of the enterprise network (e.g., router 187B of FIG. 1B). Network node 500, operating as a packet-based router, may collect data at a tunnel level, and the tunnel data may be retrieved by NMS 130 via an API or an open configuration protocol or the tunnel data may be reported to NMS 130 by NMS agent 544 or another module running on network node 500.

The data collected in data store 530 and reported by network node 500 may include periodically reported statistical data and asynchronously reported event data. Network node 500 is configured to collect logical path statistics via bidirectional forwarding detection (BFD) probing and data extracted from messages and/or counters at the logical path (e.g., peer path or tunnel) level. In some examples, network node 500 is configured to collect statistics and/or sample other data according to a first periodic interval, e.g., every 3 seconds, every 5 seconds, etc. Network node 500 may store the collected and sampled data as path data in data store 530.

In some examples, network node 500 optionally includes an NMS agent 544. NMS agent 544 may periodically create a package of the statistical data according to a second periodic interval, e.g., every 3 minutes. In some examples, the package of statistical data may also include details about clients connected to network node 500 and the associated client sessions. NMS agent 544 may then report the package of statistical data to NMS 130 in the cloud. In other examples, NMS 130 may request, retrieve, or otherwise receive the package of statistical data from network node 500 via an API, an open configuration protocol, or another of communication protocols. The package of statistical data created by NMS agent 544 or another module of network node 500 may include a header identifying network node 500 and the statistics and data samples for each of the logical paths from network node 500. In still other examples, NMS agent 544 reports event data to NMS 130 in the cloud asynchronously, i.e., in response to the occurrence of certain events at network node 500 as the events happen.

In accordance with the disclosed techniques, in some examples, network node 500 may operate as one of network access devices 108 of FIG. 1A, e.g., one of switches 146 or routers 147, and perform AI processing of locally accessible data at network node 500 in coordination with NMS 130. For example, network node 500 may access, from NMS 130, model parameters of an AI model assigned to network node 500 and generate or load a local version of the AI model corresponding to the model parameters onto processing circuitry 506, which, in some examples, may include an AI processor (e.g., a GPU, NPU, TPU, AIU, etc.). Network node 500 may determine, using the AI model running on processing circuitry 506, one or more inferences based on data locally accessible at network node 500, e.g., data included in data store 530. Network node 500 may then send an indication of the one or more inferences to NMS 130 over network 104.

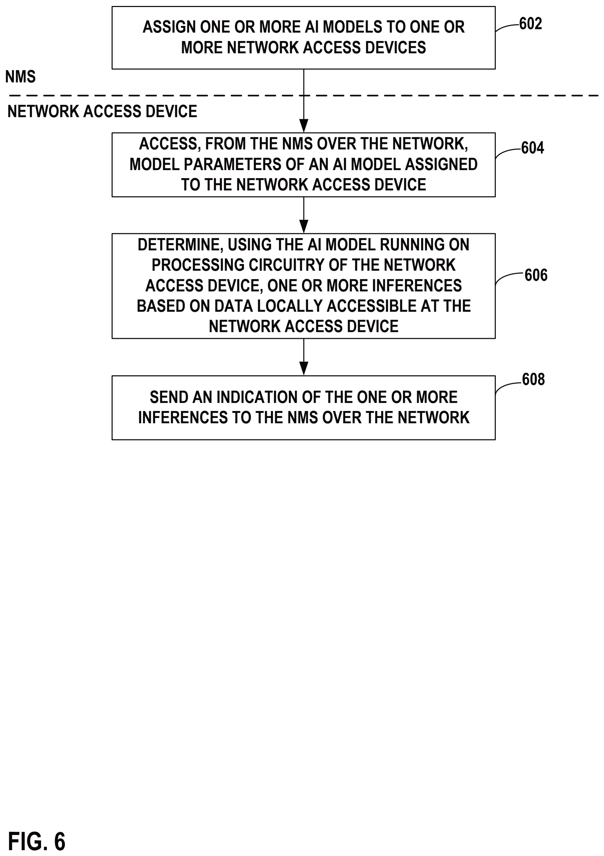

FIG. 6 is a flowchart illustrating an example operation of performing AI processing at a network access device at a network edge in coordination with a network management system, in accordance with one or more techniques of this disclosure. The example operation of FIG. 6 is described with respect to NMS 130 and AP 142A-1 of FIG. 1A. In other examples, the operation of FIG. 6 may be performed by any of APs 142, switches 146 and/or routers 147 of FIG. 1A, AP device 200 of FIG. 2, NMS 300 of FIG. 3, and/or network node 500 of FIG. 5.

NMS 130 assigns one or more of AI models 138 to one or more network access devices 108 (602). For example, AI model scheduler 134 of NMS 130 may assign an AI model to a network access device, e.g., AP 142A-1, based on one or more of a type of data locally accessible at AP 142A-1, a quantity of data locally accessible at AP 142A-1, or an issue identified at AP 142A-1. AI model scheduler 134 of NMS 130 may synchronously (e.g., hourly, daily, weekly, monthly, or the like) or asynchronously (e.g., based on a triggering event) initiate distribution of model parameters (e.g., weights and/or biases) of the one or more of AI models 138 to the assigned one or more network access devices 108. For example, AI model scheduler 134 of NMS 130 may distribute or push a message to AP 142A-1 that includes model parameters of one of AI models 138 assigned to AP 142A-1 and instructions to cause AP 142A-1 to generate or load a version of the AI model, e.g., AI model 145A-1, corresponding to the model parameters onto processing circuitry of AP 142A-1.

In some examples, NMS 130 may train one or more of AI models 138 based on data for a plurality of network access devices 108 at each of sites 102 or across sites 102. AI model scheduler 134 may synchronously or asynchronously initiate retraining of the one or more of AI models 138 by NMS 130. As one example, AI model scheduler 134 may initiate retaining of at least one of AI models 138 on an hourly, daily, weekly, monthly, or annual basis. As another example, AI model scheduler 134 may initiate retraining of at least one of AI models 138 based on detection of data drift, reduced accuracy, or other performance issues associated with the AI model at NMS 130 or a version of the AI model at one of network access devices 108.

A network access device accesses model parameters of an AI model assigned to the network access device from NMS 130 over network 104 (604). For example, AP 142A-1 may receive a message from NMS 130 via a secure connection, the message including the model parameters of the assigned one of AI models 138 and instructions for AP 142A-1 to generate or load a version of the AI model, e.g., AI model 145A-1, corresponding to the model parameters onto processing circuitry of AP 142A-1. In some scenarios, the processing circuitry of AP 142A-1 may include an AI processor (e.g., a GPU, NPU, TPU, AIU, or the like) capable of running the AI model. In other scenarios, the processing circuitry of AP 142A-1 may comprise a central processing unit capable of running the AI model.

The network access device determines, using the AI model running on the processing circuitry, one or more inferences based on data locally accessible at the network access device (606). For example, inference engine 144A-1 of AP 142A-1 provides locally accessible data as input to AI model 145A-1 and obtains the one or more inferences as output from AI model 145A-1. The locally accessible data may include client level statistics, radio statistics, transmission statistics, or event data generated and/or monitored at AP 142A-1. The locally accessible data may include real time data at AP 142A-1 or near real time data captured at AP 142A-1 during a first time window (e.g., one second, 10 seconds, 30 seconds, or another duration of less than one minute).

In some scenarios, inference engine 144A-1 of AP 142A-1 runs AI model 145A-1 on the data locally accessible at AP 142A-1 according to a frequency of less than one minute. Inference engine 144A-1 may apply the locally accessible data during the first time window as input to AI model 145A-1 to infer performance at AP 142A-1 for a subsequent time period, e.g., a subsequent hour or day. In some examples, inference engine 144A-1 may apply real time data at AP 142A-1 as input to AI model 145A-1 such that the model outputs inferences in near real time, e.g., each second.

In some examples, the network access device may obtain, over network 104, one or more network parameters indicative of performance of the network. For example, AP 142A-1 may obtain one or more of network parameters 137 from NMS 130 over network 104. The network parameters may comprise non-real time site-level parameters, such as WAN bandwidth, to which network access devices 108 do not have local access. NMS 130 may synchronously or asynchronously update network parameters 137 based on changes to the one or more network parameters 137 observed by NMS 130. For example, NMS 130 may dynamically send or push updated network parameters 137 to network access devices 108 as the network parameters change. Network parameters 137 may generally have a lower frequency of change, e.g., daily, weekly, or monthly, compared to the near-constantly changing data locally accessible at network access devices 108.

Inference engine 144A-1 may determine the one or more inferences using AI model 142A-1 based on both the data locally accessible at AP 142A-1 and the one or more network parameters. AP 142A-1 may obtain first network parameters over network 104 for a first time period and inference engine 144A-1 may determine, using AI model 145A-1, one or more first inferences based on data local accessible at AP 142A-1 during the first time period and the first network parameters. AP 142A-1 may then obtain second network parameters, which are updated from the first network parameters, over network 104 for a second time period. Inference engine 144A-1 may determine, using AI model 145A-1, one or more second inferences based on data locally accessible at AP 142A-1 during the second time period and the second network parameters.

The network access device, e.g., AP 142A-1, sends an indication of the one or more inferences to NMS 130 over network 104 (608). VNA 133 of NMS 130 may perform additional processing based on the one or more inferences obtained from AP 142A-1, such as aggregating the inferences from AP 142A-1 with inferences obtained from other APs 142 and/or network access devices 108 within a group, site, region, or organization, correlating the inferences with configuration changes or other events, performing root cause analysis of issues indicated by the one or more inferences, and/or performing scope analysis of the issues.

In some examples, the network access device, e.g., AP 142A-1, may automatically modify a configuration of AP 142A-1 based on the one or more inferences output from AI model 145A-1. In other examples, based on the one or more inferences included in the indication obtained from AP 142A-1, NMS 130 may send instructions to AP 142A-1 to automatically modify a configuration of AP 142A-1 over network 104. In further examples, NMS 130 may generate a notification for display that includes an insight or recommended action based the one or more inferences included in the indication obtained from AP 142A-1.

The one or more inferences output from AI model 145A-1 may comprise inferred values of one or more parameters at AP 142A-1. Inference engine 144A-1 may determine that the one or more inferences indicate an issue at AP 142A-1 based on at least one of the inferred values being outside a desirable range or failing to satisfy a threshold. In addition to the indication of the one or more inferences, AP 142A-1 may send an indication of the determined issue to NMS 130 over network 104.

In one scenario, AP 142A-1 itself may perform root cause analysis of the issue by determining contributions of different parameters of the data locally accessible at AP 142A-1 to the issue using AI model 145A-1. For example, inference engine 144A-1 may perform a Shapley analysis by running AI model 145A-1 multiple times with different parameters to determine a root cause of the issue. AP 142A-1 may then send an indication of the issue and the root cause of the issue to NMS 130 over network 104. It may be beneficial to perform the root cause analysis at AP 142A-1 itself such that the analysis can be run with the full set of data from which the issue was inferred.

In another scenario, based on determining the issue, AP 142A-1 may generate a package of the data locally accessible at AP 142A-1 used to infer the issue at AP 142A-1, and send the package to NMS 130 over network 104. NMS 130 may then perform root cause analysis of the reported issue by determining contributions of different parameters of the data included in the package to the issue using a version of AI model 145A-1 at NMS 130, e.g., one of AI models 138. It may be beneficial to perform the root cause analysis at NMS 130 to offload larger processing jobs from network access devices 108. In this scenario, the inferred issue at AP 142A-1 may act as a trigger such that a large amount of data is only transmitted over network 104 to NMS 130 for more advanced processing if an issue is first inferred at AP 142A-1.

The techniques described herein may be implemented in hardware, software, firmware, or any combination thereof. Various features described as modules, units or components may be implemented together in an integrated logic device or separately as discrete but interoperable logic devices or other hardware devices. In some cases, various features of electronic circuitry may be implemented as one or more integrated circuit devices, such as an integrated circuit chip or chipset.

If implemented in hardware, this disclosure may be directed to an apparatus such as a processor or an integrated circuit device, such as an integrated circuit chip or chipset. Alternatively, or additionally, if implemented in software or firmware, the techniques may be realized at least in part by a computer-readable medium comprising instructions that, when executed, cause a processor to perform one or more of the methods described above. For example, the computer-readable medium may store and/or convey such instructions for execution by a processor.

A computer-readable medium may form part of a computer program product, which may include packaging materials. A computer-readable medium may comprise a computer data storage medium such as random access memory (RAM), read-only memory (ROM), non-volatile random access memory (NVRAM), electrically erasable programmable read-only memory (EEPROM), Flash memory, magnetic or optical data storage media, and the like. In some examples, an article of manufacture may comprise one or more computer-readable storage media.

In some examples, the computer-readable storage media may comprise non-transitory media. The term "non-transitory" may indicate that the storage medium is not embodied in a carrier wave or a propagated signal. In certain examples, a non-transitory storage medium may store data that can, over time, change (e.g., in RAM or cache).

. A computer-readable medium may also or alternatively be a transmission medium by which instructions may be conveyed. A computer-readable transmission medium may include carrier waves, transmission signals or the like. A computer-readable transmission medium may convey instructions between components of a single computer system and/or between plural separate computer systems.

The code or instructions may be software and/or firmware executed by processing circuitry including one or more processors, such as one or more digital signal processors (DSPs), general purpose microprocessors, application-specific integrated circuits (ASICs), field-programmable gate arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, functionality described in this disclosure may be provided within software modules or hardware modules.

Therefore, from one perspective, there have been described techniques for performing artificial intelligence (AI) processing of locally accessible data at a network access device at a network edge in coordination with a network management system (NMS) configured to manage a plurality of network access devices over the network. The NMS assigns one or more AI models to one or more network access devices. The NMS may synchronously or asynchronously initiate distribution of model parameters of the AI models to the assigned network access devices. A network access device accesses, from the NMS over the network, model parameters of an AI model assigned to the network access device. The network access device determines, using the AI model running on processing circuitry of the network access device, one or more inferences based on data locally accessible at the network access device, and sends an indication of the one or more inferences to the NMS over the network.

## Claims

1. A system comprising:
a network management system configured to assign one or more artificial intelligence, AI, models to one or more network access devices; and
a network access device of the one or more network access devices, the network access device comprising processing circuitry configured to:
access, from the network management system over a network, model parameters of an AI model assigned to the network access device;
determine, using the AI model running on the processing circuitry, one or more inferences based on data locally accessible at the network access device; and
send an indication of the one or more inferences to the network management system over the network.

2. The system of claim 1, wherein the network management system is configured to train the one or more AI models based on data for a plurality of network access devices.

3. The system of any of claims 1-2, wherein the network management system is configured to one of synchronously or asynchronously initiate distribution of model parameters of the one or more AI models to the one or more network access devices.

4. The system of any of claims 1-3, wherein to assign the one or more AI models to the one or more network access devices, the network management system is configured to assign the AI model to the network access device based on one or more of a type of data locally accessible at the network access device, a quantity of data locally accessible at the network access device, or an issue identified at the network access device.

5. The system of any of claims 1-4, wherein to determine the one or more inferences, the processing circuitry of the network access device is configured to run the AI model on the data locally accessible at the network access device according to a frequency of less than one minute.

6. The system of any of claims 1-5, wherein the one or more inferences comprise inferred values of one or more parameters at the network access device, and wherein the processing circuitry of the network access device is configured to determine that the one or more inferences indicate an issue at the network access device based on at least one of the inferred values being outside a desirable range or failing to satisfy a threshold.

7. The system of claim 6, wherein the processing circuitry of the network access device is configured to determine, using the AI model, contributions of different parameters of the data locally accessible at the network access device to the issue for root cause analysis of the issue.

8. The system of claim 6, wherein the processing circuitry of the network access device is configured to:
generate a package of the data locally accessible at the network access device used to infer the issue at the network access device, and
send the package to the network management system over the network.

9. The system of claim 8, wherein the network management system is configured to determine, using a version of the AI model at the network management system, contributions of different parameters of the data included in the package to the issue for root cause analysis of the issue.

10. The system of any of claims 1-9, wherein the processing circuitry of the network access device is configured to, based on the one or more inferences, automatically modify a configuration of the network access device.

11. The system of any of claims 1-9, wherein the network management system is configured to, based on the one or more inferences included in the indication obtained from the network access device, send instructions to the network access device over the network to automatically modify a configuration of the network access device.

12. The system of any of claims 1-11, wherein the processing circuitry of the network access device is configured to:
obtain, over the network, one or more network parameters indicative of performance of the network; and
determine, using the AI model, the one or more inferences based on the data locally accessible at the network access device and the one or more network parameters.

13. A method comprising:
assigning, by a network management system, one or more artificial intelligence, Al, models to one or more network access devices;
accessing, by a network access device of the one or more network access devices and from the network management system over a network, model parameters of an AI model assigned to the network access device;
determining, by the network access device using the AI model running on processing circuitry of the network access device, one or more inferences based on data locally accessible at the network access device; and
sending, by the network access device, an indication of the one or more inferences to the network management system over the network.

14. The method of claim 13, further comprising steps corresponding to the functionality recited in any of claims 2-12.

15. Computer-readable media comprising instructions that, when executed by one or more programmable processors, cause the one or more programmable processors to perform the method recited by any of claims 13-14.
